# EUROPÄISCHE PATENTSCHRIFT

(11) **EP 0 768 795 B1**
(45) Veröffentlichungstag und Bekanntmachung des Hinweises auf die Patenterteilung: **29.12.1999**
(21) Anmeldenummer: 95116195.9
(22) Anmeldetag: 13.10.1995
(51) Int. Cl.: H04N 1/54

(54) **Verfahren zur Herstellung einer Schablone, insbesondere für den Papier- oder Textildruck**
Method for manufacturing stencil-plates, particularly for paper or textile printing
Procédé pour la fabrication de pochoirs, particulièrement pour l'impression de papier ou de textiles

(43) Veröffentlichungstag der Anmeldung: 16.04.1997
(73) Patentinhaber: Schablonentechnik Kufstein Aktiengesellschaft, 6330 Kufstein (AT)
(72) Erfinder: Fischer, Hannes, A-6300 Wörgl (AT)
(74) Vertreter: TER MEER STEINMEISTER & PARTNER GbR

(56) Entgegenhaltungen:
- EP-A- 0 293 214
- EP-A- 0 612 181
- FR-A- 2 136 475
- FR-A- 2 645 073
- GB-A- 2 199 462
- US-A- 4 507 685

## Beschreibung

Die Erfindung betrifft ein Verfahren gemäß dem Oberbegriff des Patentanspruchs 1. Diese Verfahren dient zur Herstellung einer rotierend aufgespannten Schablone, die beispielsweise zum Bedrucken von Papier oder Textilien verwendet werden kann. Hier kann es sich z.B. um eine Siebdruck- oder Tiefdruckschablone, oder dergleichen, handeln. Sie kann aus einem hohlzylindrischen Rotationszylinder bestehen oder aus einem flachen Schablonenelement, das zur Bearbeitung um einen drehbaren Zylinder gelegt wird.

Aus der FR-A-2 645 073 ist bereits ein Verfahren zur Herstellung einer Graviermaske zum Bedrucken von Textilien bekannt, bei welchem erste Nutzdaten im Bezug auf eine Vorlage mittels eines Abtastlesers erfaßt werden, bei dem diese Daten bearbeitet werden, um zweite Nutzdaten entsprechend einem Druckmotiv zu bilden, und bei dem diese zweiten Daten bearbeitet werden, um dritte Nutzdaten entsprechend einem Film zu bilden, auf den das Motiv kopiert, in Rapport gebracht und multipliziert wird, wobei diese Nutzdaten von einer Laser-Graviermaschine annehmbar sind. Dabei werden die besagten ersten Nutzdaten in Bezug auf die Vorlage im Punktmodus erfaßt, wobei diese ersten Nutzdaten bearbeitet werden, um zweite Nutzdaten relativ zum Motiv und zum Film in einem Beschreibungsmodus der Parameter des von der Vorlage abgegebenen Bildes zu erzeugen, und wobei ferner die zweiten Nutzdaten in den Punktmodus umgesetzt werden, um sie zur Laser-Graviermaschine zu übertragen.

Aus der FR-A-2 136 475 ist eine Einrichtung zur optisch-elektrischen Abtastung einer Zeichnung bekannt, die aus einer Vielzahl von Punkten besteht, die in je einer, aus mehreren Farben ausgebildeten Farbe gezeichnet sind, und zum Umwandeln der durch Abtastung der Punkt gewonnenen Informationen in für die einzelnen Farben charakteristische Farbsignale, enthaltend einen relativ zur Zeichnung bewegbaren Abtastkopf mit mehreren optisch-elektrischen, auf je einen bestimmten Spektralbereich ansprechenden Abtastorganen, denen Farbdiskriminatoren zur Erzeugung je eines Farbsignals nachgeschaltet sind, wobei jeder Farbdiskriminator nur dann ein Farbsignal erzeugt, wenn die analogen Ausgangssignale aller ihm zugeordneten Abtastorgane oder aus diesen Ausgangssignalen abgeleitete Signale innerhalb eines nach oben und unten begrenzten Toleranzbereichs liegen.

Aus der US-A-4 507 685 ist außerdem bekannt, zur Erzeugung von Zwischentönen Helligkeitsdaten, die aus einem einer Farbe zugeordneten Rahmenspeicher ausgelesen werden, mit Ausgangsdaten aus einem weiterem Speicher zu verknüpfen, um feinere Bildelemente für die jeweiligen Bildelemente zu erzeugen.

Der Erfindung liegt die Aufgabe zugrunde, das Verfahren der eingangs genannten Art so weiterzubilden, daß die Erstellung der Bitfolgen, die für die Gravur der jeweiligen Schablonen erforderlich sind, besser mit dem tatsächlichen Arbeitsprozeß zur Bildung der jeweiligen Schablonen koordiniert ist.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Ein Verfahren zur Herstellung einer rotierend aufgespannten Schablone, bei der mittels eines Engravers in der Oberfläche der Schablone ein Muster erzeugt wird, indem ein relativ zur Schablone bewegter Gravurkopf des Engravers durch einen Steuerrechner in Übereinstimmung mit einer vorgegebenen Bitfolge ein- und ausgeschaltet wird, zeichnet sich dadurch aus, daß die Bitfolge aus einer Bytefolge generiert wird, die einer mehrere Farben enthaltenden Farbdatei entnommen wird, welche ein Muster beschreibt und auf einem Massenspeicher eines Servers gespeichert ist, wobei jedes Byte der Bytefolge eine Farbinformation enthält, und daß der Server die die Bytefolge enthaltende Farbdatei zur Gravur der Schablone zu einem weiteren Rechner sendet und dieser weitere Rechner die dieser Schablone zugeordnete Bitfolge erstellt.

Der als Server arbeitende Zentralrechner ist jetzt von der Erstellung der jeweiligen Bitfolgen für die einzelnen Schablonen befreit und darüber hinaus ist es möglich, erst dann die jeweiligen Bitfolgen aus den Bytefolgen zu generieren, wenn die Schablonen tatsächlich graviert werden. Hierdurch wird einerseits Betriebszeit für den Zentralrechner bzw. Server eingespart und andererseits Speicherbereich in seinem Massenspeicher, da dort nur die die Farbdateien enthaltenen Bytefolgen gespeichert zu werden brauchen und nicht die tatsächlich zur Gravur derjeweiligen Schablonen erforderlichen Bitfolgen. Letztere werden durch den weiteren Rechner bzw. Steuerrechner, der unmittelbar am Engraver angeordnet sein kann, generiert, und zwar erst dann, wenn sie wirklich benötigt werden. Hierzu können die entsprechenden Bytefolgen aus dem Massenspeicher des Zentralrechners abgerufen oder, falls sie sich auf entnehmbaren Massenspeichern befinden, durch Einschieben des Massenspeichers in den weiteren Rechner bzw. Steuerrechner übergeben werden.

Ausführungsbeispiele der Erfindung werden nachfolgend unter Bezugnahme auf die Zeichnung im einzelnen beschrieben. Es zeigen:
**Figur 1a** eine aus einer Vielzahl von Bytes bestehende Farbdatei für ein Ganztonformat. wobei Jedes Byte die Farbe oder Farbnummer eines Bildpunkts beschreibt:
**Figur 1b** eine aus der Farbdatei gemäß Figur la erzeugte Bitfolge zum Ein- und Ausschalten eines Engravers;
**Figur 2a** eine aus mehreren Bytes bestehende Farbdatei für ein Halbtonformat, bei dem jeweils ein Bildpunkt durch drei Farbkomponenten R, G und B beschrieben ist, denen Jeweils zwei Byte zugeordnet sind;
**Figur 2b** eine Farbpalette, die pro Farbe bzw. Farbnummer obere und untere Grenzwerte für die Farbkomponenten R, G und B enthält;
**Figur 2c** eine mit Hilfe der Farbdatei nach Figur 2a und der Farbpalette nach Figur 2b erzeugte Bitfolge zum Ein- und Ausschalten des Engravers;
**Figur 3a** eine weitere Farbdatei im Halbtonformat, die jedem Bildpunkt drei Bytes zuordnet, von denen jeweils eines für eine seiner drei Farbkomponenten R, G und B vorgesehen ist;
**Figur 3b** eine Grauton-Referenzzelle mit mehreren Farb- bzw. Einzelzellen; und
**Figur 4** eine Vorrichtung zur Durchführung des Verfahrens.

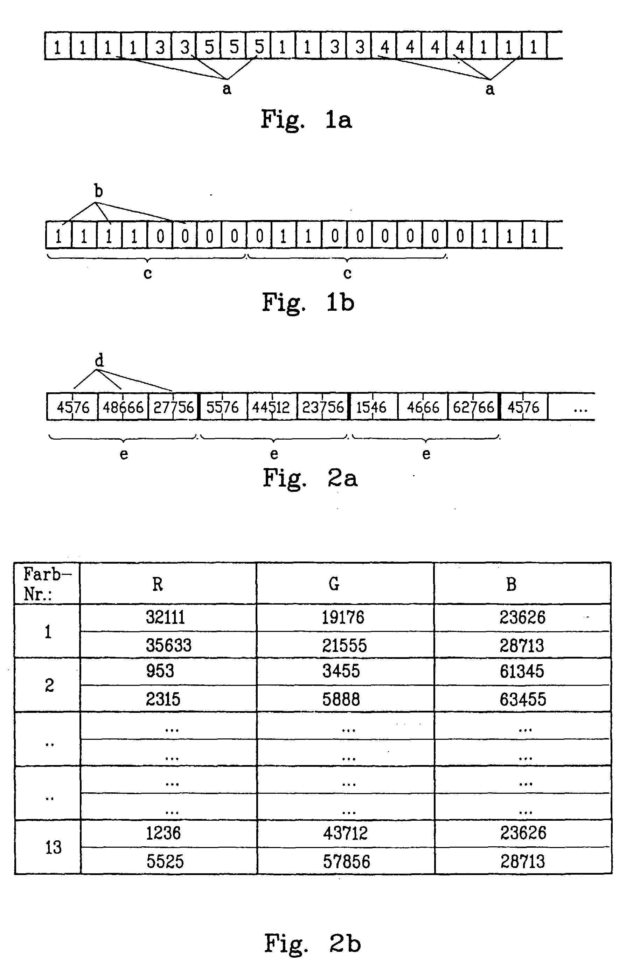

In Figur 1a ist symbolisch der Anfang einer Farbdatei dargestellt, welche ein bildartiges Motiv als gespeicherten Datensatz enthält. Das hier gezeigte Format ist das einfachste Format, welches für eine solche Aufzeichnung verwendet wird. Es wird bei diesem Beispiel für jeden Bildpunkt ein Byte als Datenspeicherraum verwendet und es soll dieses Format als Ganztonformat bezeichnet werden. Damit man mit einem so kleinen Speicherbedarf pro Pixel das Auslangen finden kann, muß das Muster die Voraussetzung erfüllen, daß die Summe der unterschiedlichen Farbtöne einschließlich deren Intensitäten die Zahl 255 nicht übersteigt. Auf dem Gebiet der farblichen Ausrüstung (Druck) von Textilien gibt es viele Muster, die dieser Anforderung entsprechen. Dies vor allem deshalb, weil man bei vielen Farbsystemen, die z. B. aus Gründen der Farbechtheit verwendet werden, auf unansehnliche Mischfarben verzichtet. Da man aus Kostengründen auf wenige Schablonen angewiesen ist, sind die wirtschaftlich verarbeitbaren Muster solche, die nur aus 6 bis 16 unterschiedlichen Farben bestehen.

Die Darstellung eines Bytes in diesem Bild wird durch Kästchen a symbolisiert, in welche jeweils der Wert eines Bytes eingetragen ist. Dieser Wert bezeichnet die Nummer der Farbe. Für einige Anwendungen muß man festlegen, wie die Farbe einer gegebenen Nummer aus Komponenten zusammenzusetzen ist. Auch andere Festlegungen sind notwendig. Will man das durch diese Datei beschriebene Muster z. B. auf einem Bildschirm ausgeben, so muß man wissen, welche R, G, B-Intensitäten einem bestimmten Bytewert zuzuordnen sind. Außerdem muß bekannt sein, wieviele Bildpunkte bzw. Pixel oder Byte eine Musterreihe bilden, ob diese Musterreihe horizontal oder vertikal am Bildschirm darzustellen ist, wie oft ggf. das so gebildete Motiv horizontal oder vertikal zu wiederholen ist und anderes mehr. Für den Zweck der Gravur einer Schablone wäre es hingegen nicht unbedingt notwendig, die genaue Zusammensetzung der Farbe zu kennen. Wichtig ist es aber z. B. zu wissen, wieviele Byte der Datei eine Bildpunktreihe bilden, wie oft diese Bildpunktreihe auf einem Schablonenumfang wiederholt werden muß, usw. Bei den heute üblichen Produktionsmethoden kann man während der Herstellung eines Musters auf einer Gravieranlage auf dessen Darstellung auf einem Monitor oft nicht verzichten und deshalb setzt man alle diese Informationen gemeinsam mit der Farbinformation am zweckmäßigsten in einen Kopf der Datei. Dieser Kopf ist in Bild la nicht dargestellt, er besitzt aber ein festgelegtes Format. Das die Gravur auf einem Engraver steuernde Programm kennt dieses Format und ist daher in der Lage, alle Informationen, die für die Bedienung und das Auslesen des Musters notwendig sind, dem Dateikopf zu entnehmen.

Der Engraver, z. B. ein Laserengraver, muß während der Gravur einer Schablone Ein- und Ausschaltsignale für den Laser erhalten, weil etwa eine Lackschicht von der Oberfläche eines Rotationssiebs abgetragen oder gehärtet werden muß, was in an sich bekannter Weise durch einen Laserstrahl erfolgen kann. Zum Zweck eines schnellen Datentransfers wird man hier auf die kleinste logische Einheit zurückgreifen, die in der Lage ist, einen Ein- oder einen Ausschaltbefehl zu transportieren und dies ist eben ein Bit. Obwohl es denkbar wäre. für einen Ein- oder Ausschaltbefehl ein Byte (= 8 Bit) oder ein Nibbel (=4 Bit) zu verwenden, wird man dies aus dem genannten Grund nicht oder nur in sehr seltenen Fällen (lange, stark gestörte Datenleitungen vom Steuerrechner zur Graviermaschine) anstreben. Man hat daher die Aufgabe, aus dem in Figur 1a gezeigten Ganztonformat eine für die jeweilige Gravuraufgabe geeignete und richtige Bitfolge - das sogenannte Gravurformat - zu bilden.

Dieses Format ist in Figur 1b dargestellt. Bei diesem Beispiel wird im Gegensatz zur Figur 1a für jedes Bit ein eigenes Kästchen b verwendet. Ein Byte wird dann durch acht hintereinanderfolgende Kästchen b gebildet und ist durch die Abschnitte c gekennzeichnet. Es wird zusätzlich angenommen, daß das Gravurformat für die Schablone mit der Nummer 1, also für die erste Schablone des Satzes bzw. erste Farbe, erzeugt werden soll. Ein Bit darf nur dann gesetzt werden, also den Wert 1 erhalten, wenn der Werteinhalt eines Bytes des Ganztonformats (Figur la) gerade der Zahl 1 entspricht. Im anderen Fall, wenn also der Wert eines Bytes im Ganztonformat nicht mit der Nummer (hier 1) der gerade zu gravierenden Schablone übereinstimmt, dann muß das diesem Byte entsprechende Bit im Gravurformat auf den Wert 0 gesetzt werden. Es erfolgt mit anderen Worten eine logische UND-Verknüpfung zwischen der Nummer der gewünschten Farbe und der im Byte enthaltenen Farbinformation. Gemäß der Erfindung findet diese Umwandlung der Bytefolge der Figur 1a zur Bitfolge der Figur 1b auf dem Steuerrechner 16 der Gravieranlage statt oder auf einem weiteren Rechner, der nicht mit dem Rechner des das Muster vorverarbeitenden CAD-Systems identisch ist, der aber sehr wohl mit diesem durch eine Datennetzleitung oder eine Busleitung verbunden sein kann. Die Nummer der gewünschten Farbe wird über eine Tastatur in den Steuerrechner 16 oder weiteren Rechner eingegeben.

Neben den bisher besprochenen Musterreproduktionen und den diesen zuzuordnenden Dateien für die Speicherung der Musterdaten gibt es Fälle, in welchen die Farbreproduktion in jedem einzelnen Bildpunkt durch Mischung unterschiedlicher Farbmengen oder durch die Ausgabe unterschiedlicher Intensitäten dreier verschiedener Farbkomponenten erfolgen soll. Dies ist z. B. bei einer entsprechend vielfärbigen Darstellung eines Musters auf einem Monitor ein üblicher Vorgang. Auch bei textilen Druckfarben wird manchmal eine solche Mischung trotz aller Schwierigkeiten bei der Mischfarbenbildung angestrebt. Ein Schablonensatz, der aus drei bis sechs Einzelschablonen besteht, kann dann mit diesen wenigen Schablonen ein hochfärbiges Muster reproduzieren. Da eine solche Musterreproduktion trotz ihrer Hochfärbigkeit nur geringe Investitionskosten verursacht, ist sie wirtschaftlich. Das coloristische System der Druckfarben muß sich für eine solche Mischfarbenbildung eignen. Ein solches Muster benötigt dann sehr viel mehr Farbinformationen und daher muß für einen Bildpunkt ein größerer Speicherplatz zur Verfügung stehen.

In Figur 2a wird daher wiederum der Teil einer Farbdatei gezeigt, welche ein Muster beschreibt. Nur wird jetzt ein Monitorbild beschrieben, welches viele unterschiedliche Farbwerte und Intensitäten enthält. Am Monitor werden die Farben, wie an sich bekannt ist, durch die drei Farbkomponenten R(ot), G(rün), B(lau) dargestellt, wobei die Intensität jeder dieser drei Farbkomponenten zwischen einem minimalen und einem maximalen Farbwert eingestellt werden kann. Es soll weiter angenommen werden, daß für die Beschreibung jeder Intensität der drei Komponenten ein zwei Byte langes Datenwort zur Verfügung steht und daß die Intensitäten daher durch Werte zwischen 0 und 65535 beschrieben werden können. Diese Farben sollen auf einen Schablonensatz umgelegt werden, der aus 13 Schablonen besteht und mit welchem daher 13 verschiedene Farben gedruckt werden können. Jeweils drei 2-Byte lange Datenworte d sind zu einem Datensatz e zusammengefaßt, welcher die drei Farbekomponenten R, G, B in ihrer jeweiligen Intensität genau beschreibt. Das Format der Daten in dieser Farbdatei soll als Halbtonformat bezeichnet werden, weil durch diese Art der Datenaufzeichnung Farben mit sehr vielen Farbtönen und vielen Intensitäten - sogenannte Halbtöne - sehr gut gekennzeichnet werden können. Das Gravurformat kann aber mit diesen Angaben allein noch nicht gebildet werden.

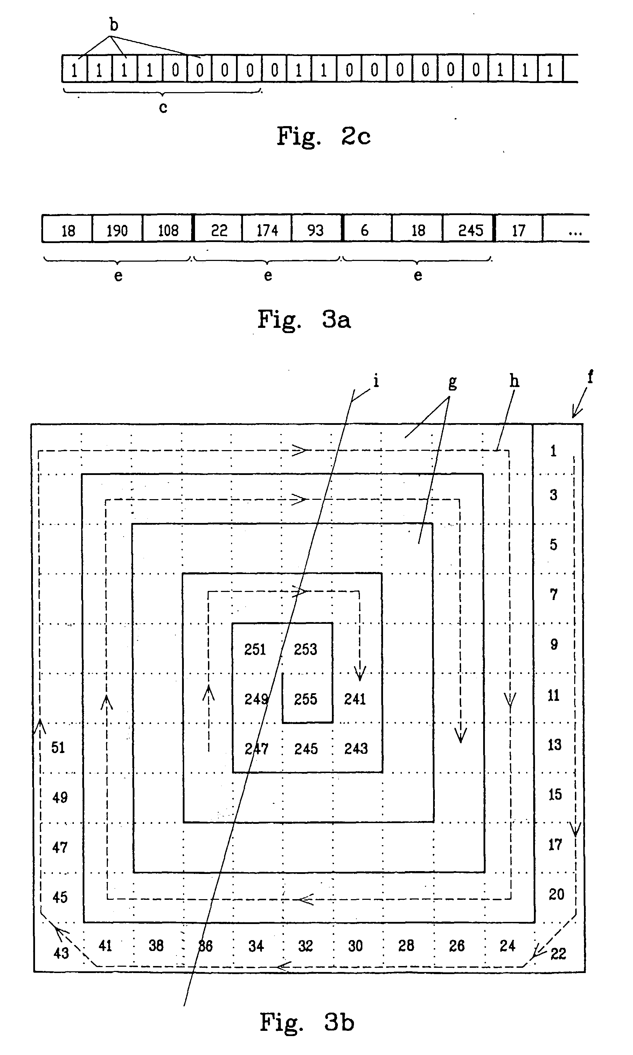

Um das Gravurformat zu erzeugen, ist es notwendig, z. B. in einer Tabelle Farben durch die Angabe von Grenzwerten für die einzelnen Farbkomponenten zu definieren. In Figur 2b ist eine solche Tabelle bzw. Farbpalette gezeigt. Diese enthält für jede der angeführten Druckfarben einen oberen und einen unteren Grenzwert, die nicht über- bzw. unterschritten werden dürfen, wenn ein Farbton der angeführten Druckfarbe zugeordnet werden soll. Ein Datensatz e des Halbtonformats (Figur 2a) wird dann durch eine der Farbnummern 1 bis 13 der Tabelle ersetzt, wenn die Intensität jeder Farbkomponente dieses Datensatzes e innerhalb aller Komponentengrenzwerte dieser Farbe liegt. Kann ein Datensatz, der die Farbe eines Bildpunkts beschreibt, keiner der 13 Farben zugeordnet werden, dann kann er z. B. die Farbnummer des Bildpunkts erhalten, welcher zuletzt zugeordnet werden konnte. Dies ist bei Mischfarbtönen im Übergangsbereich zwischen zwei Farbtönen von Bedeutung. Stimmt die auf diese Weise erhaltene Farbnummer mit der Nummer der gerade zu gravierenden Schablone oder der Schablone, für welche das Gravurformat erzeugt wird, überein, dann wird das den Datensatz repräsentierende Bit auf 1 gesetzt, sonst auf 0. Die entsprechende Bitfolge zeigt die Figur 2c. Auch hier wird die Umsetzung des Halbtonformats (Figur 2a) in das Gravurformat (Figur 2c) gemäß der Erfindung vom Steuerrechner 16 des Engravers oder von einem mit diesem vernetzten, weiteren Rechner abgewickelt. Dazu wird die Farbpalette gemäß Figur 2b im Steuerrechner bzw. weiteren Rechner gespeichert, und in diesen wird auch die Nummer (z. B. 13) der gewünschten Farbe eingegeben. Wenn die Arbeitsgeschwindigkeit des Steuerrechners 16 oder des Rechnerverbunds aus diesem und dem weiteren Rechner ausreicht, erfolgt der Vergleich des Halbtonformats mit den Farbkomponenten-Grenzwerten der gerade zu gravierenden Schablone am besten während der Gravur - also "on fly". Der Vergleich der Farbintensitäten mit den Grenzwerten kann bei der "on fly"-Rasterung sehr schnell erfolgen, weil Jeder Datensatz e des Halbtonformats nur mit den 3 mal 2 Grenzwerten für die Farbekomponenten der gerade zu gravierenden Schablone verglichen werden muß. Allerdings kann hierbei nicht so einfach entscheiden werden, welcher Farbe ein Bildpunkt zugeteilt wird, wenn die Komponentenintensitäten nicht in die Tabelle passen. Dieser Farbpunkt geht verloren oder hinterläßt auf dem zu bedruckenden Substrat einen weißen Punkt. Werden für die 13 Schablonen hingegen temporäre Speicherdateien erzeugt, dann ist der Verlust eines Bildpunkts weniger wahrscheinlich, weil dieser durch die Farbe (= Schablone) des zuletzt zugeordneten Bildpunkts ersetzt wird. Die Gefahr der Bildung weißer Flecken in den Übergangszonen von einer Farbe zur anderen ist dadurch geringer.

In Figur 3a wird ein weiterer Musterbeschreibungsteil einer Farbdatei im Halbtonformat gezeigt. Hier wird angenommen, daß die Intensitätswerte den üblichen Monitorintensitäten entsprechen, also Werte aufweisen, die zwischen 0 und 255 liegen. Es soll hier weiter vorausgesetzt werden, daß mit dieser Datei ein Halbtonschablonensatz erzeugt werden soll, der nur aus drei Schablonen besteht. Dieser Schablonensatz muß dann beim späteren Druckvorgang Mischfarben erzeugen. Eine Schablone wird dann für eine der drei Farbkomponenten R, G, B erzeugt. Da die Farbintensitätswerte jenen Wert nicht übersteigen, der durch ein Byte dargestellt werden kann, braucht hier ein Datensatz e nur 3 Byte Speicherplatz, nämlich je ein Byte für jede der drei Farbkomponenten R, G, B. Während der Gravur der roten Schablone wird für jeden auf der Schablone zu erzeugenden Bildpunkt das Byte ausgelesen, welches die Intensität der Rot-Komponente beschreibt. Gleiches gilt für die anderen Farbkomponenten.

In Figur 3b ist ein für die Verarbeitung des Datensatzes der Figur 3a weiterer wichtiger Informationsteil gezeigt. Es handelt sich hierbei um die Grauton-Referenzzelle eines Halbtonrasters. Solche Referenzzellen können in getrennten Dateien definiert werden. Im Kopf des Datensatzes der Figur 3a befindet sich dann nur ein Hinweis auf die richtige Referenzzelle und die richtige Referenzzellendatei. Diese Grauton-Referenzzelle besteht hier aus 11 mal 11 Farb- bzw. Einzelzellen g. Diese Einzelzellen g enthalten z. B. in einer rechteckförmig zum Zentrum laufenden Spirale h monoton steigende Intensitätswerte von 1 bis 255. Da in diesem Beispiel weniger Farb- bzw. Einzelzellen als Intensitätswerte vorhanden sind, steigen die Intensitätswerte von Zelle zu Zelle um einen Wert 2 und nach jeder neunten Zelle um den Wert 3. Sowohl die Darstellung der Grauton-Referenzzelle als auch jene der Farb- bzw. Einzelzelle ist symbolisch zu verstehen. Die Grauton-Referenzzelle dient mit ihren Einzelzellen als eine Art Verglichsvorlage und ist nur temporär im Steuerrechner 16 bzw. weiteren Rechner gespeichert. Sie ist der kleinste, für eine halbtonartige Aufrasterung der Musterdaten erforderliche Teil des Halbtonrasters, welchen man dem Musterbild unterlegen möchte. Der Halbtonraster wird aus mehrfachen Gründen (Vermeidung von Moiré, Vermeidung von Nahtstellen) gegenüber der Umfangsrichtung bzw. der Achsrichtung gedreht. Aus diesem Grund muß man sich auch die Referenzzelle des Halbtonrasters gegenüber der Umfangsrichtung der zu gravierenden Schablone gedreht denken. Der fokussierte, gravierende Laserstrahl bewegt sich über die Schablone auf einer Spur eng benachbarter Schraubenlinien und weist daher gegenüber der Referenzzelle f nahezu die gleiche Neigung auf, welche die Umfangsrichtung einnimmt. i bezeichnet einen Abschnitt einer solchen Schraubenlinie. Der Steuerrechner des Engravers oder ein diesem zugeordneter weiterer Rechner verfolgt mittels einer entsprechenden Rechnung sowohl die Spur des fokussierten Laserstrahls durch die Referenzzelle fund deren Einzelzellen g als auch die Intensitätswerte, die aus der Halbtondatei (Figur 3a) für den jeweils aktuellen Bildpunkt zu beheben sind. Jedesmal wenn der Laserstrahl in eine Einzelzelle g eintaucht. vergleicht er deren Intensitätswert mit dem Intensitätswert des zu gravierenden Bildpunkts. Ist der Intensitätswert aus der Halbtondatei größer als jener der Einzelzelle g, dann wird oder bleibt der Laser eingeschaltet. Ist der Intensitätswert aus der Halbtondatei dagegen kleiner als jener der Einzelzelle g, dann wird oder bleibt der Laser ausgeschaltet. Erfolgt die Aufrasterung nicht "on fly" sondern vorab und wird eine temporäre Datei gebildet, in welche die Bitfolge des Gravurformats abgelegt wird, dann wird ganz analog ein Bit dann auf 1 gesetzt, wenn der Laser eingeschaltet würde oder eingeschaltet bliebe und umgekehrt. Auch hier wird die Grauton-Referenzzelle gemäß Figur 3b im Steuerrechner 16 bzw. weiteren Rechner gespeichert. Ferner kann ihnen (auch über manuelle Eingabe) mitgeteilt werden, für welche Farbkomponenten R, G, B eine Schablone hergestellt bzw. Gravur-Bitfolge erstellt werden soll.

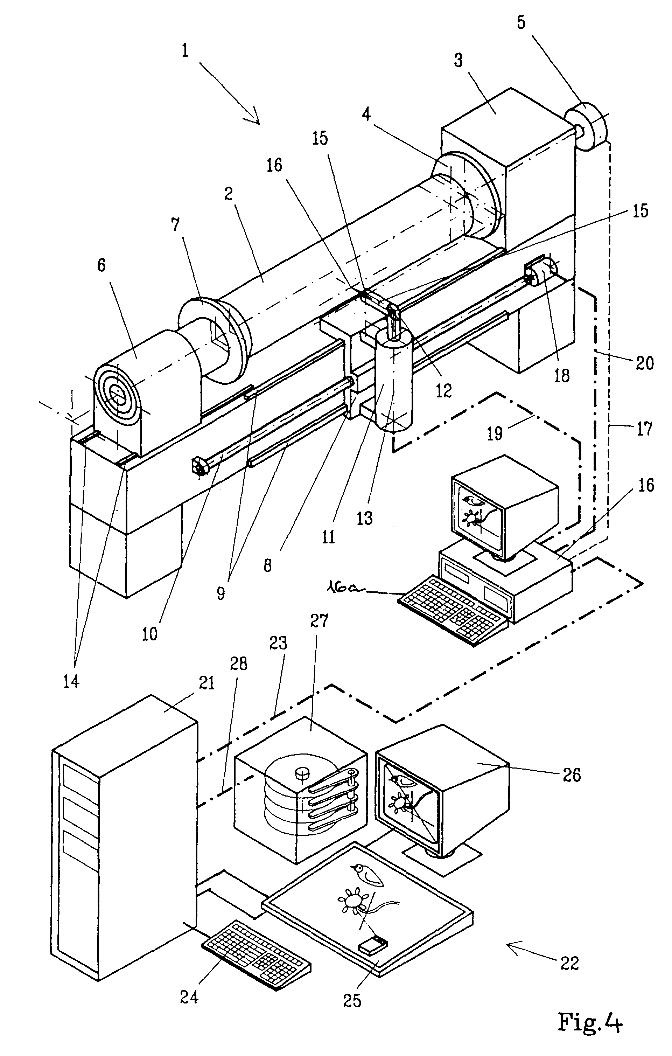

Die Figur 4 zeigt einen an sich bekannten Laserengraver 1. Auf diesem ist eine zu gravierende Schablone 2 zwischen zwei Stützkegeln, dem Spindelstockstützkegel 4 und dem Reitstockstützkegel 7 aufgespannt. Der Reitstock 6 dient zur drehbaren Lagerung des Reitstockstützkegels 7 und der Spindelstock 3 treibt mit Hilfe eines nicht sichtbaren Motors den Spindelstockstützkegel 4. Ein Encoder 5 dient der Generierung von Impulsen, welche derjeweiligen Drehbewegung der Stützkegel 4. 7 entsprechen. Ein Schlitten 8 wird auf Führungen 9 parallel zur Achse der Schablone 2 bewegt. Eine Schraubspindel 10 dient zum Antreiben dieses Schlittens 8. Ein Laser 11, der auf dem Schlitten 8 montiert ist, emittiert einen Laserstrahl 13, der durch einen Umlenkspiegel 12 um 90 Grad umgelenkt und durch ein Linsensystem 15 bei 16 fokussiert wird. Die Oberfläche der Schablone 2 ist mit einem lichtempfindlichen Lack überzogen, dieser wird durch die Einwirkung des Laserstrahls entweder gehärtet oder an den belichteten Stellen abgetragen. Der Reitstock 6 ist gemeinsam mit dem Reitstockstützkegel 7 auf Führungen 14 verschiebbar und auf diese Weise kann der Reitstockstützkegel 7 auf die jeweilige Länge der Schablone 2 eingestellt werden. Ein Steuerrechner 16 ist dem Laserengraver 1 zugeordnet. Dieser Steuerrechner 16 erhält die Musterdaten vom Server 21 des CAD-Systems 22 über die Datenleitung 23. Die Musterdaten bestehen aus der schon mehrfach beschriebenen Zahlen- bzw. Bytefolge für die Schablonennummern, die eventuell mit Halbtoninformation zu kombinieren sind. Aus diesen Musterdaten generiert der Steuerrechner 16 die jeweilige Bitfolge. Bei flachen Schablonen erhält in dieser Bitfolge ein Bit den Wert 1. wenn der entsprechende Musterpunkt auf der Schablone 2 graviert werden soll. Wenn der Musterpunkt nicht graviert werden soll, wird dem zugehörigen Bit der Wert 0 erteilt. Bei Halbtonschablonen wird aus einem Wert der zahlenfolge die Schablonennummer und zusätzlich mit Hilfe der Halbton-Umsetzungstabelle gemäß Figur 2b auch der Halbtonwert ermittelt. Die jeweilige Bitfolge wird über einen nicht mehr dargestellten Leistungsumsetzer dem Laser 11 zugeleitet, welcher entsprechend dieser Bitfolge ein- oder ausgeschaltet wird. Durch diesen Vorgang wird das Muster auf der Schablone 2 erzeugt. Der Steuerrechner 16 ermittelt auch, wann der Schrittmotor 18 einen nächsten Schritt ausführen muß. Die notwendigen Schrittimpulse werden über die Leitung 20 und einen ebenfalls nicht mehr gezeigten Leistungsverstärker dem Schrittmotor 18 zugesendet. Der Schrittmotor 18 treibt die Schraubspindel 10 und bewegt auf diese Weise den Schlitten 8 mit dem Laser 11. Das hier gezeigte CAD-System besteht noch aus einer Tastatur 24, einem Digitizer 25 zur Eingabe graphischer Daten und dem Bildschirm 26. Ein Massenspeicher 27 dient zur Speicherung von Bilddaten, die über die bidirektionale Datenleitung 28 an den Massenspeicher 27 oder den Server 21 übermittelt werden. Im Massenspeicher 27 lassen sich die Farbdateien gemäß den Figuren 1a, 2a und 3a temporär speichern, bevor sie zur Erstellung der jeweiligen Bitfolgen gemäß den Figuren 1b, 2a und der Bitfolge gemäß dem dritten Ausführungsbeispiel zum Steuerrechner 16 übertragen werden.

## Patentansprüche

1. Verfahren zur Herstellung einer rotierend aufgespannten Schablone (2), bei der mittels eines Engravers (1) in der Oberfläche der Schablone (2) ein Muster erzeugt wird, indem ein relativ zur Schablone (2) bewegter Gravurkopf (8, 11) des Engravers (1) durch einen Steuerrechner (16) in Übereinstimmung mit einer vorgegebenen Bitfolge ein- und ausgeschaltet wird, dadurch gekennzeichnet, daß die Bitfolge aus einer Bytefolge generiert wird, die einer mehrere Farben enthaltenden Farbdatei entnommen wird, welche das Muster beschreibt und auf einem Massenspeicher (27) eines Servers (21) gespeichert ist, wobei jedes Byte der Bytefolge eine Farbinformation enthält, und daß der Server (21) die die Bytefolge enthaltende Farbdatei zur Gravur der Schablone (2) zu einem weiteren Rechner sendet und dieser weitere Rechner die dieser Schablone (2) zugeordnete Bitfolge erstellt.

2. Verfahren nach Anspruch 1, **dadurch gekennzeichnet,** daß die Bitfolge dadurch erstellt wird, daß eine logische UND-Verknüpfung zwischen dieser Farbinformation und einer Information über eine gewünschte Farbe erfolgt, welche in den weiteren Rechner eingegeben wird.

3. Verfahren nach Anspruch 1, **dadurch gekennzeichnet,** daß die Farbdatei pro Bildpunkt mindestens drei seine Farbkomponenten beschreibende Datenwörter enthält, die daraufhin überprüft werden, ob sie jeweils innerhalb von Grenzwerten liegen, die die gerade zu gravierende Farbe, die innerhalb einer Farbpalette gespeichert ist, beschreiben, und daß zur Erzeugung der Bitfolge nur dann ein Bit gesetzt wird, wenn alle drei Farbkomponenten jeweils innerhalb dieser Grenzwerte liegen.

4. Verfahren nach Anspruch 3, **dadurch gekennzeichnet,** daß die Farbpalette im weiteren Rechner gespeichert ist und ihm die Nummer der zu gravierenden Farbe mitgeteilt wird.

5. Verfahren nach Anspruch 3 oder 4, **dadurch gekennzeichnet,** daß die Farbpalette die der Farbnummer zugeordneten oberen und unteren Grenzwerte pro Farbkomponente enthält.

6. Verfahren nach Anspruch 1, **dadurch gekennzeichnet,** daß die Farbdatei pro Bildpunkt mindestens drei seine Farbkomponenten beschreibende Datenwörter enthält, und daß für jeweils eine der Farbkomponenten ein Bit der Bitfolge immer dann gesetzt wird, wenn der Wert des Datenwerts dieser Farbkomponente größer ist als der Wert einer Farbzelle (g) einer Grauton-Referenzzelle (f).

7. Verfahren nach Anspruch 6, **dadurch gekennzeichnet,** daß die Grauton-Referenzzelle (f) im weiteren Rechner gespeichert ist.

8. Verfahren nach Anspruch 6 oder 7, **dadurch gekennzeichnet,** daß dem weiteren Rechner mitgeteilt wird, für welche der Farbkomponenten die Bitfolge zu erstellen ist.

9. Verfahren nach einem der Ansprüche 1 bis 8, **dadurch gekennzeichnet,** daß als Schablone (2) eine Rotationsschablone zum Einsatz kommt.

10. Verfahren nach einem der Ansprüche 1 bis 9, **dadurch gekennzeichnet,** daß als der weitere Rechner der Steuerrechner (16) zum Einsatz kommt.

## Claims

1. Method of producing a rotating, clamped stencil (2), in which a pattern is produced in the surface of the stencil (2) by means of an engraver (1), in that an engraving head (8, 11) of the engraver (1), which engraving head is moved in relation to the stencil (2), is switched on and off by a control computer (16) in coincidence with a predefined bit sequence, characterized in that the bit sequence is generated from a byte sequence which is taken from a colour file containing several colours, which colour file describes a pattern and is stored in a large-scale memory (27) of a server (21), each byte of the byte sequence containing colour information, and in that the server (21) sends the colour file containing the byte sequence relating to the engraving of the stencil (2) to a further computer, and this further computer creates the bit sequence assigned to this stencil (2).

2. Method according to Claim 1, characterized in that the bit sequence is created by carrying out a logic AND operation between this colour information and information about a desired colour, which is entered into the further computer.

3. Method according to Claim 1, characterized in that the colour file contains, for each image point, at least three datawords which describe the colour components of said image point and which are then checked to see whether they respectively lie within limiting values which describe the colour which is about to be engraved, which is stored within a colour palette, and in that, to produce the bit sequence, a bit is only set if all three colour components respectively lie within these limiting values.

4. Method according to Claim 3, characterized in that the colour palette is stored in the further computer and the number of the colour to be engraved is communicated to the further computer.

5. Method according to Claims 3 or 4, characterized in that the colour palette contains the upper and lower limiting values for each colour component which are assigned to the colour number.

6. Method according to Claim 1, characterized in that the colour file contains, for each image point, at least three datawords which describe the colour components of said image point, and in that, for in each case one of the colour components a bit in the bit sequence is always set if the value of the data for this colour component is greater than the value of a colour cell (g) of a grey tone reference cell (f).

7. Method according to Claim 6, characterized in that the grey tone reference cell (f) is stored in the further computer.

8. Method according to Claim 6 or 7, characterized in that the further computer is sent information about for which of the colour components the bit sequence is to be created.

9. Method according to one of Claims 1 to 8, characterized in that a rotary stencil is used as the stencil (2).

10. Method according to one of Claims 1 to 9, characterized in that the control computer (16) is used as the further computer.

## Revendications

1. Procédé de fabrication d'un pochoir (2), appliqué pour couvrir une surface rotative, pour lequel, au moyen d'un graveur (1), un motif est généré dans la surface du pochoir (2), par le fait qu'une tête de gravure (8, 11), déplacée par rapport au pochoir (2), du graveur (1) est mise en service et hors service par un ordinateur de commande (16) en coïncidence avec une succession de bits prédéterminés, caractérisé en ce que la succession de bits est générée à partir d'une succession d'octets qui sont prélevés dans un fichier de couleurs contenant plusieurs couleurs, qui décrit le motif et est mémorisé sur une mémoire de masse (27) d'un serveur (21), chaque octet de la succession d'octets contenant une information de couleur, et en ce que le serveur (21) envoie à un autre ordinateur le fichier de couleurs contenant la succession d'octets, pour la gravure du pochoir (2), et cet autre ordinateur établissant la succession de bits associés à ce pochoir (2).

2. Procédé selon la revendication 1, caractérisé en ce que la succession de bits est établie par le fait qu'est établie une combinaison logique ET. entre cette information de couleur et une information concernant la couleur souhaitée qui a été introduite dans l'autre ordinateur.

3. Procédé selon la revendication 1, caractérisé en ce que le fichier couleur contient par point image au moins trois mots de données décrivant ses composantes de couleur, les mots étant ensuite vérifiés pour savoir s'ils sont situés au-dessous chacun de valeurs limites, qui décrivent la couleur justement devant être gravée, mémorisés à l'intérieur d'une palette de couleur, et en ce que. pour générer la succession de bits. on ne place ensuite qu'un bit lorsque la totalité des trois composantes de couleur est chaque fois située dans la plage de ces valeurs limites.

4. Procédé selon la revendication 1, caractérisé en ce que la palette de couleur est mémorisée dans un autre ordinateur. et le numéro de la couleur à graver lui étant communiqué.

5. Procédé selon la revendication 3 ou 4, caractérisé en ce que la palette de couleur contient par composante de couleur les valeurs limites supérieure et inférieure associées au numéro de couleur.

6. Procédé selon la revendication 1, caractérisé en ce que le fichier de couleurs contient par point image au moins trois mots de données qui décrivent ses composantes de couleur, et en ce que chaque fois pour l'une des composantes couleur un bit de la succession de bits est toujours fixée lorsque la valeur du mot de données de cette composante de couleur est supérieure à la valeur d'une cellule de couleur (g) d'une cellule de référence à tons de gris (f).

7. Procédé selon la revendication 6, caractérisé en ce que la cellule de référence à tons de gris (f) est mémorisée dans un autre ordinateur.

8. Procédé selon la revendication 6 ou 7, caractérisé en ce que l'on communique à l'autre ordinateur quelle est la composante couleur pour laquelle la succession de bits doit être établie.

9. Procédé selon l'une des revendications 1 à 8, caractérisé en ce qu'on utilise comme pochoir (2) un pochoir rotatif.

10. Procédé selon l'une des revendications 1 à 9, caractérisé en ce qu'on utilise comme autre ordinateur l'ordinateur de commande (16).
